(19) Europäisches Patentamt
European Patent Office
Office européen des brevets

(11) **EP 3 552 750 B1**

(12) **EUROPEAN PATENT SPECIFICATION**

(45) Date of publication and mention
of the grant of the patent:
**11.10.2023 Bulletin 2023/41**

(21) Application number: **17881135.2**

(22) Date of filing: **05.12.2017**

(51) International Patent Classification (IPC):
**B23K 9/23** (2006.01)      **B23K 9/18** (2006.01)
**B23K 31/00** (2006.01)      **B23K 35/30** (2006.01)
**B23K 103/04** (2006.01)

(52) Cooperative Patent Classification (CPC):
**B23K 9/18; B23K 9/186; B23K 9/23;
B23K 35/0261; B23K 35/3086; C21D 9/50;**
B23K 2103/04

(86) International application number:
**PCT/JP2017/043538**

(87) International publication number:
**WO 2018/110357 (21.06.2018 Gazette 2018/25)**

(54) **WELDING METHOD**

SCHWEISSVERFAHREN

PROCÉDÉ DE SOUDAGE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **12.12.2016 JP 2016239958**

(43) Date of publication of application:
**16.10.2019 Bulletin 2019/42**

(73) Proprietor: **Hitachi Zosen Corporation**
**Osaka-shi, Osaka 559-8559 (JP)**

(72) Inventors:
• **TANAKA, Tomohiro**
**Osaka-shi**
**Osaka 559-8559 (JP)**
• **ABE, Masamitsu**
**Osaka-shi**
**Osaka 559-8559 (JP)**
• **NAKATANI, Mitsuyoshi**
**Osaka-shi**
**Osaka 559-8559 (JP)**

(74) Representative: **Grünecker Patent- und**
**Rechtsanwälte**
**PartG mbB**
**Leopoldstraße 4**
**80802 München (DE)**

(56) References cited:
CN-A- 101 700 599      CN-A- 105 728 908
JP-A- H0 639 587       JP-A- H0 796 390
JP-A- H10 323 794      JP-A- S54 117 341
JP-A- S60 174 295      JP-A- 2003 105 442
JP-A- 2005 329 415

**Description**

Technical Field

The present invention relates to a welding method and particularly relates to a welding method for welding base materials of modified 9Cr-1Mo steel together with a welding material by submerged arc welding.

Background Art

Modified 9Cr-1Mo steel having higher heatproof temperature than, for example, 2.25 Cr-1Mo-V steel has recently received attention in the use of devices that require high heat resistance. Patent Literature 1 discloses the chemical composition of a proper welding material used for submerged arc welding and TIG welding of modified 9Cr-1Mo steel.
JP H10 323794 A relates to a method of manufacturing of a welded steel tube of 9%Cr-1%Mo steel. CN 105 728 908 A relates to a field welding method of a domestic A335 P91 high-pressure thick-wall pipe. JP H07 96390 A relates to a wire for welding 9Cr-1Mo steel. JP H06 39587 A relates to a submerged arc welding method for high-Cr ferritic heat resisting steel. CN 101 700 599 A relates to a submerged automatic arc welding method of SA335P91 steel.

Citation List

Patent Literature

Patent Literature 1: US2005257853A

Summary of Invention

Technical Problem

In Patent Literature 1, however, toughness at a low temperature is not considered and thus toughness on a weld joint, which is a welded point, may become disadvantageously low at a low temperature. Low toughness at a low temperature may cause problems such as brittle fractures on the weld joint at a low temperature. In order < > to improve toughness at a low temperature, optimization is necessary for the welding conditions as well as the chemical composition of the welding material. TIG welding has lower welding efficiency than submerged arc welding.
An object of the present invention is to provide a welding method that achieves a weld joint having high toughness at a low temperature with high welding efficiency.

Solution to Problem

The present invention defines a welding method for welding base materials of modified 9Cr-1Mo steel together with a welding material by submerged arc welding in claim 1. The welding material is a chemical composition defined by ASME SFA-5.23 F9PZ-EB9-B9. The base materials are welded with a welding heat input of 27.0 kJ/cm or higher and 33.0 kJ/cm or lower. Post-heat treatment is performed with an L.M.P. of $21.04 \times 10^3$ or more and $23.30 \times 10^3$ or less. The L.M.P is calculated by equation (1) below:

$$\mathrm{L.M.P.} = \mathrm{T}(20 + \log_{10}t) \ \ldots \ (1)$$

T:   holding temperature [K]
t:   holding time [hour]

Advantageous Effects of Invention

The welding method of the present invention achieves a weld joint having high toughness at a low temperature with high welding efficiency. Furthermore, the obtained weld joint has high mechanical strength.

Brief Description of Drawings

[FIG. 1] FIG. 1 is a graph of the relationship between L.M.P. value and the absorbed energy of a Charpy impact test at 0°C.
[FIG. 2] FIG. 2 is a graph of the relationship between L.M.P. value and tensile strength value.

Description of Embodiment

A welding method according to the present invention will be specifically described below. Submerged arc welding having high welding efficiency is used for the welding method according to the present invention. The base material of welding is high heat-resistant modified 9Cr-1Mo steel. Modified 9Cr-1Mo steel is described in, for example, Patent Literature 1 and thus the detailed explanation thereof is omitted.

A welding wire used as a welding material is a chemical composition defined by ASME SFA-5.23 F9PZ-EB9-B9 (hereinafter, may be referred to as "B9 standard"). B9 standard defines a chemical composition that contains substances shown in Table 1 below with ranges shown in Table 1. The remainder is Fe and inevitable impurities. The wire diameter of the welding wire is not particularly limited.

[Table 1]

|  | C | Si | Mn | P | s | Cu | Ni | Cr | Mo | V | Al | Nb | N |
|---|---|---|---|---|---|---|---|---|---|---|---|---|---|
| Minimum content [mass%] | 0.08 | - | - | - | - | - | - | 8.00 | 0.85 | 0.15 | - | 0.02 | 0.02 |
| Maximum content [mass%] | 0.13 | 0.80 | 1.20 | 0.01 | 0.01 | 0.25 | 0.80 | 10.50 | 1.20 | 0.25 | 0.04 | 0.10 | 0.07 |

In the welding method of the present invention, welding is performed under the following welding heat input conditions and then post-heat treatment is performed under L.M.P. conditions that will be discussed later. "Welding method" includes the step of welding including preheating and the step of post-heat treatment.

(Welding heat input)

In the present invention, a required welding heat input is 27.0 kJ/cm or higher and 33.0 kJ/cm or lower. In the case of low welding heat input, e.g., a welding heat input of lower than 27.0 kJ/cm, only a small amount of the welding wire is melted for each welding pass and the number of welding passes necessary for the welding step increases, resulting in low welding efficiency. Moreover, a welding metal increases in cooling rate and thus may become brittle with hardness. This may cause insufficient toughness at a low temperature. The welding metal means the molten welding wire (welding material) and a molten base material that become solidified during welding.

If the welding heat input exceeds 33.0 kJ/cm, the welding metal decreases in cooling rate and thus has a rough metal structure. This may cause insufficient toughness at a low temperature. Moreover, a welding heat input higher than 33.0 kJ/cm may cause a hot crack on the welding metal during welding.

In the present invention, the welding heat input is preferably 28.8 kJ/cm or higher and 33.0 kJ/cm or lower. In the case of a welding heat input of 28.8 kJ/cm or higher, the amount of the welding wire melted for each welding pass, that is, a welding area is, for example, 45 mm$^2$, which is sufficiently large at a welded portion. This can remarkably reduce the number of welding passes, thereby increasing the welding efficiency. Conversely, in the case of a welding heat input of 27.0 kJ/cm or higher and lower than 28.8 kJ/cm, the number of welding passes is not considerably reduced.

(Preheating and interpass temperature)

A preheating and interpass temperature is preferably set at 200°C or higher and 250°C or lower. A preheating and interpass temperature at 200°C or higher can prevent a cold crack on the welding metal during welding. Furthermore, a preheating and interpass temperature at 250°C or lower allows the welding metal to have a fine metal structure, thereby improving toughness at a low temperature

(L.M.P.)

Post-heat treatment (also referred to as tempering) is performed after welding. In the post-heat treatment, the hardness of the welding metal is reduced to have lower brittleness, thereby improving the toughness. L.M.P. (Larson Miller Parameter) is known as a parameter for the effect of post-heat treatment characterized by a post-heat treatment temperature and a holding time as expressed by equation (1) below:

$$\mathrm{L.M.P.} = \mathrm{T}(20 + \log_{10} t) \ \ldots \ (1)$$

T:  holding temperature [K]

t:  holding time [hour]

In the present invention, it is necessary to set L.M.P. at $21.04 \times 10^3$ or more and $23.30 \times 10^3$ or less. If L.M.P. is less than $21.04 \times 10^3$, the hardness is less effectively reduced in post-heat treatment, resulting in insufficient toughness at a low temperature. If L.M.P. exceeds $23.30 \times 10^3$, good toughness is achieved but sufficient mechanical strength cannot be obtained.

The welding method according to the present invention performs welding and post-heat treatment on the base materials of modified 9Cr-1Mo steel with the welding material, which is defined by the B9 standard, by submerged arc welding under the specific welding conditions and the specific post-heat treatment conditions. This achieves a welded joint having high toughness at a low temperature with high welding efficiency. Furthermore, the obtained welded joint has high mechanical strength. The welded joint means a joint including the welding metal and the base material around the welding metal.

The welding method of the present invention is properly used for manufacturing, for example, process equipment for plants. The plants include, for example, plants for fertilizers, GTL (gas to liquid), CTL (coal to liquid), petroleum processing, and LNG (liquefied natural gas). The process equipment for plants includes a pressure vessel, a heat exchanger, and a reactor in such plants.

Such process equipment for plants continuously operates at a high temperature and thus requires high heat resistance. When being shut down during maintenance, the process equipment is cooled. Moreover, the equipment started from a low temperature may have a brittle fracture. Thus, the process equipment for plants needs to be so tough at a low temperature as to cause no brittle fractures.

According to the present invention, the base materials are made of modified 9Cr-1Mo steel and thus can obtain high heat resistance, and welding and post-heat treatment are performed under the specific welding conditions and post-heat treatment conditions. This achieves the welded joint having high toughness at a low temperature.

Examples

The present invention will be more specifically described below in accordance with examples. Modified 9Cr-1Mo steel was used as a base material. A welding wire with a chemical composition defined by the B9 standard was used as a welding material. Specifically, the used welding wire had a chemical composition that contains predetermined amounts of substances shown in Table 2 below and Fe and inevitable impurities as a remainder. The wire had a diameter of 4 mm.

[Table 2]

| | C | Si | Mn | P | s | Cu | Ni | Cr | Mo | V | Al | Nb | N |
|---|---|---|---|---|---|---|---|---|---|---|---|---|---|
| Content [mass%] | 0.11 | 0.26 | 0.71 | 0.008 | 0.004 | 0.03 | 0.47 | 9.32 | 0.99 | 0.21 | <0.01 | 0.06 | 0.04 |

[Example 1]

In the welding method of example 1, a welding target was a test piece of modified 9Cr-1Mo steel having a thickness of 50 mm, a width of 200 mm, and a length of 660 mm with a U-groove having a groove depth of 42 mm. The test piece had a preheating and interpass temperature of 200 to 250°C. The test piece was welded using the welding wire having a current of 450 A, a voltage of 32 V, and a velocity of 30 cm/min during welding. The welding heat input is calculated by current [A] × voltage [V] ÷ velocity [cm/min] × 60. The welding heat input of example 1 was 28.8 [kJ/cm].

The post-heat treatment conditions include a temperature of 740°C and a holding time of ten hours. L.M.P. serving as a parameter of post-heat treatment is calculated by the foregoing equation (1). L.M.P. in example 1 was $21.27 \times 10^3$.

After the completion of post-heat treatment, the welding metal was partially collected and a V-groove was added to the collected welding metal, so that a test piece for a Charpy impact test was obtained. The Charpy impact test was conducted at 0°C by using the test piece. As a result of the test, absorbed energy was 32.0 J. The absorbed energy indicates the mean value of six test results obtained using six test pieces. Since the absorbed energy was more than 27 J, the test result was evaluated as "good". This is because the absorbed energy of 27 J or more in a Charpy impact test indicates good toughness in an EN standard.

Table 3 shows the evaluation results of the welding method according to example 1.

[Examples 2 to 9, Comparative examples 1 to 3]

As shown in Table 3, the welding conditions and the post-heat treatment conditions are different from those of example 1. Other conditions are identical to those of example 1. Test pieces in examples 2 to 9 and comparative examples 1 to 3 were obtained under these conditions. In examples 3 and 4 and comparative example 1, two welding torches, that is, a leading torch and a trailing torch are used. The welding heat input is calculated by current [A] × voltage [V] ÷ velocity [cm/min] × 60 × 2. Table 3 shows the evaluation results of the welding method according to examples 2 to 9 and comparative examples 1 to 3.

[Table 3]

| | Welding conditions | | | | Post-heat treatment conditions | | | Absorbed energy [J] | Evaluation | Tensile strength [MPa] | Number of torches |
|---|---|---|---|---|---|---|---|---|---|---|---|
| | Current [A] | Voltage [V] | Velocity [cm/min] | Welding heat input [kJ/cm] | Holding temperature [°C] | Holding time [hour] | L.M.P. ($\times 10^3$) | | | | |
| Example 1 | 450 | 32 | 30 | 28.8 | 740 | 10 | 21.27 | 32.0 | Good | - | 1 |
| Example 2 | 450 | 32 | 30 | 28.8 | 770 | 10 | 21.90 | 67.7 | Good | - | 1 |
| Example 3 | 500 | 32 | 60 | 32.0 | 740 | 10 | 21.27 | 40.1 | Good | - | 2 |
| Example 4 | 500 | 32 | 60 | 32.0 | 770 | 10 | 21.90 | 70.0 | Good | - | 2 |
| Example 5 | 500 | 32 | 30 | 32.0 | 745 | 6 | 21.15 | 27.7 | Good | 677 | 1 |
| Example 6 | 500 | 32 | 30 | 32.0 | 745 | 10 | 21.38 | 47.4 | Good | 671 | 1 |
| Example 7 | 500 | 32 | 30 | 32.0 | 765 | 8 | 21.70 | 55.5 | Good | 652 | 1 |
| Example 8 | 500 | 32 | 30 | 32.0 | 745 | 40 | 21.99 | 85.3 | Good | 637 | 1 |
| Example 9 | 500 | 32 | 30 | 32.0 | 765 | 40 | 22.42 | 94.5 | Good | 623 | 1 |
| Comparative example 1 | 580 | 32 | 60 | 37.1 | 740 | 10 | 21.27 | 18.9 | Defective | - | 2 |
| Comparative example 2 | 500 | 32 | 30 | 32.0 | 720 | 4 | 20.46 | 8.5 | Defective | 700 | 1 |
| Comparative example 3 | 500 | 32 | 30 | 32.0 | 730 | 6 | 20.84 | 15.2 | Defective | 691 | 1 |

The test pieces of examples 1 to 9 satisfied the welding conditions and post-heat treatment conditions of the present invention. As a result, regarding the test pieces of examples 1 to 9, the absorbed energy were measured as 27 J or more in a Charpy impact test at 0°C, achieving high toughness at a low temperature. Thus, as has been discussed, the test results were evaluated as "good". In comparative example 1, the welding heat input exceeded 33.0 kJ/cm and thus the absorbed energy was measured as less than 27 J in a Charpy impact test at 0°C, resulting in low toughness at a low temperature. Therefore, the test result of comparative example was evaluated as "defective".

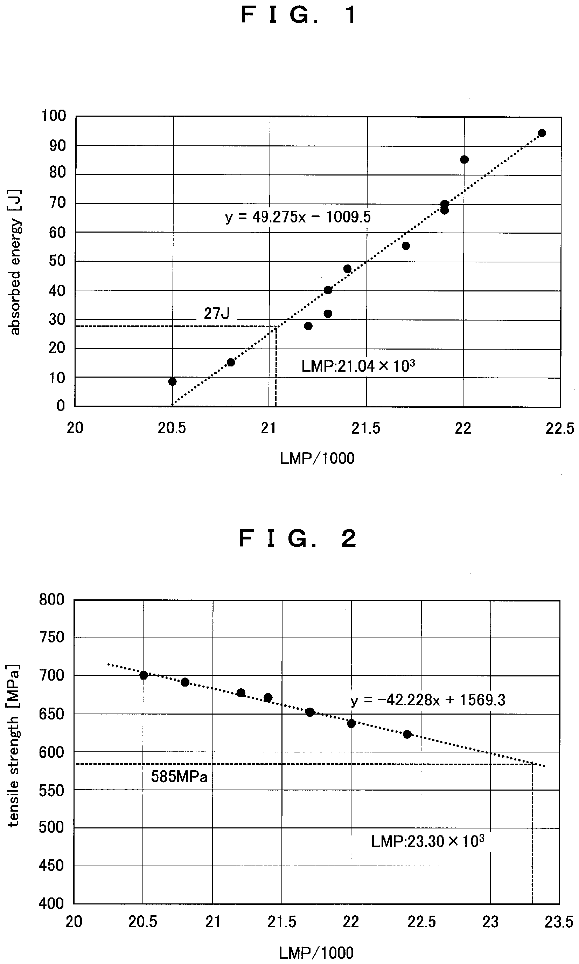

In comparative examples 2 and 3, L.M.P. in post-heat treatment were less than $21.04 \times 10^3$, resulting in low toughness at a low temperature. Thus, the test results were evaluated as "defective" as shown in Table 3. FIG. 1 is a graph of the relationship between L.M.P. values and the absorbed energy of a Charpy impact test at 0°C in examples 1 to 9 and comparative examples 2 and 3. The data of comparative example 1 is omitted in FIG. 1 because the absorbed energy was reduced by a welding heat input higher than a range defined in the present invention. As shown in the graph, it is necessary to set L.M.P. at $21.04 \times 10^3$ or more in order to obtain absorbed energy of 27 J or more in a Charpy impact test at 0°C.

Moreover, the welded joints obtained by the welding method according to examples 5 to 9 and comparative examples 2 and 3 were partially collected and the tensile strength was measured using the collected weld joints as test pieces for a tensile test. The tensile strength in each example was shown in Table 3. As the value of L.M.P. increases, toughness at a low temperature tends to increase as shown in FIG. 1 but the tensile strength tends to decrease. The welded joint tends to be required 585 MPa or more as a tensile strength. FIG. 2 is a graph of the relationship between L.M.P. values and the values of tensile strength in examples 5 to 9 and comparative examples 2 and 3. According to the result of FIG. 2, it is determined that the upper limit value of L.M.P. is $23.30 \times 10^3$ when a tensile strength of 585 MPa or more is secured. In other words, it is easily understood from FIG. 2 that when L.M.P. exceeds $23.30 \times 10^3$, the tensile strength is less than 585 MPa and thus sufficient mechanical strength cannot be obtained, which is not described as an actual comparative example in the present specification.

In examples 1 to 9, the welding material is a chemical composition that contains predetermined amounts of substances shown in Table 2. The chemical composition of the welding material of the present invention is not limited to the specific composition. A usable welding material has a chemical composition defined by the B9 standard in Table 1.

[Comparative Example 4]

A disadvantage will be specifically described as comparative example 4 when the welding heat input is lower than 27.0 kJ/cm, for example, 25.0 kJ/cm. When the welding heat input is 27.0 kJ/cm, a welding area is 42 mm². In contrast, when the welding heat input is 25.0 kJ/cm, the welding area is only 39 mm². Thus, for example, in the case of welding on a thickness of 150 mm and a groove bottom having a width of 20 mm and a V-groove having a groove angle of 10° and accordingly a cross-sectional area of 4969 mm², the welding heat input of 27.0 kJ/cm only requires about 120 welding passes, whereas when the welding heat input is, for example, 25.0 kJ/cm, the number of welding passes increases to about 130.

For example, if a cylindrical member having a diameter of 4000 mm and a length of 3000 mm is manufactured by welding a pair of structures that are U-shaped in cross section, welding is necessary at two points in the circumferential direction of the cylindrical member over the length of 3000 mm. Furthermore, if two cylindrical members are joined by welding in the longitudinal direction, welding is necessary over a length of 12500 mm in the circumferential direction. Therefore, if a structure of ten longitudinally connected cylindrical members is manufactured, welding is necessary at 20 points over a length of 3000 mm in the longitudinal direction and nine points over a length of 12500 mm in the circumferential direction. In that case, a weld line has a length of $3000 \times 20 + 12500 \times 9 = 172500$ mm. At a welding speed of 300 mm/min, a time for one pass is $172500 \div 300 = 575$ min. The time is equivalent to about ten hours.

In the case of welding on the cylindrical member having a thickness of 150 mm with a groove bottom having a width of 20 mm and a V-groove having a groove angle of 10°, as has been discussed, the welding heat input of 25.0 kJ/cm increases the number of welding passes by about 10 as compared with the weld heat input of 27.0 kJ/cm. If a time for each pass is about ten hours, the total welding time is increased by about 100 hours when the number of welding passes is increased by about 10.

**Claims**

1. A welding method for welding base materials of modified 9Cr-1Mo steel together with a welding material by submerged arc welding,

   wherein the welding material is a chemical composition defined by ASME SFA-5.23 F9PZ-EB9-B9, and
   the base materials are welded with a welding heat input of 27.0 kJ/cm or higher and 33.0 kJ/cm or lower,

**characterized in that** post-heat treatment is performed with an L.M.P. of 21.04 $\times$ 10$^3$ or more and 23.30 $\times$ 10$^3$ or less as calculated by equation (1) below:

$$\text{L.M.P.} = T(20 + \log_{10}t) \ldots (1)$$

where T is a holding temperature [K] and t is a holding time [hour].

2. The welding method according to claim 1, wherein the welding heat input is 28.8 kJ/cm or higher and 33.0 kJ/cm or lower.

3. The welding method according to claim 1 or 2, wherein a preheating and interpass temperature is set at 200°C or higher and 250°C or lower.

4. The welding method according to one of claims 1 to 3, wherein the base material is a member for constructing process equipment for a plant.


**Patentansprüche**

1. Schweißverfahren zum Verschweißen von Trägermaterialien aus modifiziertem 9Cr-1 Mo-Stahl mit einem Schweißmaterial mittels Unterpulverschweißen,

   wobei das Schweißmaterial eine durch ASME SFA-5.23 F9PZ-EB9-B9 definierte chemische Zusammensetzung ist, und
   die Trägermaterialien mit einem Schweißwärmeeintrag von 27,0 kJ/cm oder mehr und 33,0 kJ/cm oder weniger verschweißt werden,
   **dadurch gekennzeichnet, dass** Wärmenachbehandlung mit einem Larson-Miller-Parameter von 21,04 $\times$ 10$^3$ oder mehr und 23,30 $\times$ 10$^3$ oder weniger, berechnet mit der unten stehenden Gleichung (1), durchgeführt wird:

$$\text{Larson-Miller-Parameter} = T(20 + \log_{10}t) \ldots (1)$$

   wobei T eine Haltetemperatur [K] ist und t eine Haltezeit [h] ist.

2. Schweißverfahren nach Anspruch 1, wobei der Schweißwärmeeintrag 28,8 kJ/cm oder mehr und 33,0 kJ/cm oder weniger beträgt.

3. Schweißverfahren nach Anspruch 1 oder 2, wobei eine Vorwärmtemperatur und eine Temperatur zwischen den Schweißgängen auf 200 °C oder höher und 250 °C oder niedriger eingestellt wird.

4. Schweißverfahren nach einem der Ansprüche 1 bis 3, wobei das Trägermaterial ein Element zum Konstruieren verfahrenstechnischer Ausrüstung für eine Anlage ist.


**Revendications**

1. Procédé de soudage destiné à des matériaux de base de soudage d'acier 9Cr-1Mo modifié avec un matériau de soudage effectué par soudage à l'arc submergé,

   dans lequel le matériau de soudage est une composition chimique définie par la norme ASME SFA-5.23 F9PZ-EB9-B9, et
   où les matériaux de base sont soudés avec une chaleur de soudage en entrée de 27,0 kJ/cm ou supérieure et 33,0 kJ/cm ou inférieure,
   **caractérisé en ce qu'**un traitement post thermique est effectué avec un point de fusion bas (L.M.P.) de 21,04 $\times$ 10$^3$ ou plus et de 23,30 $\times$ 10$^3$ ou moins tel que calculé par l'équation (1) ci-dessous :

$$L.M.P. = T (20 + \log_{10} t) \ldots (1)$$

dans laquelle T représente la température de maintien [K] et t représente le temps de maintien [heure].

2. Procédé de soudage selon la revendication 1, dans lequel la chaleur de soudage en entrée est de 28,8 kJ/cm ou supérieure et 33,0 kJ/cm ou inférieure.

3. Procédé de soudage selon la revendication 1 ou la revendication 2, dans lequel un préchauffage est effectué et la température entre passes est établie à 200 °C ou supérieure et 250 °C ou inférieure.

4. Procédé de soudage selon l'une des revendications 1 à 3, dans lequel le matériau de base est un élément d'un équipement de processus de construction pour une usine.

$$L.M.P. = T (20 + \log_{10} t) \ldots (1)$$

# F I G. 1

# F I G. 2

**EP 3 552 750 B1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP H10323794 A
- CN 105728908 A
- JP H0796390 A
- JP H0639587 A
- CN 101700599 A
- US 2005257853 A